(19) Europäisches Patentamt European Patent Office Office européen des brevets

(11) **EP 3 016 307 B1**

(12) **EUROPEAN PATENT SPECIFICATION**

(45) Date of publication and mention of the grant of the patent:
**24.04.2019 Bulletin 2019/17**

(51) Int Cl.:
*H04J 11/00* (2006.01)   *H04L 5/00* (2006.01)
*H04J 99/00* (2009.01)

(21) Application number: **14816820.6**

(22) Date of filing: **25.03.2014**

(86) International application number:
**PCT/JP2014/058264**

(87) International publication number:
**WO 2014/208158 (31.12.2014 Gazette 2014/53)**

(54) **WIRELESS BASE STATION, USER TERMINAL, WIRELESS COMMUNICATION METHOD, AND WIRELESS COMMUNICATION SYSTEM**

DRAHTLOSE BASISSTATION, BENUTZERENDGERÄT, DRAHTLOSKOMMUNIKATIONSVERFAHREN UND DRAHTLOSKOMMUNIKATIONSSYSTEM

STATION DE BASE SANS FIL, TERMINAL UTILISATEUR, MÉTHODE DE COMMUNICATION SANS FIL, ET SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2013 JP 2013135757**

(43) Date of publication of application:
**04.05.2016 Bulletin 2016/18**

(73) Proprietor: **NTT DOCOMO, INC.**
**Chiyoda-ku**
**Tokyo 100-6150 (JP)**

(72) Inventors:
• **BENJEBBOUR, Anass**
**Tokyo 100-6150 (JP)**
• **KISHIYAMA, Yoshihisa**
**Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
EP-A1- 2 139 186          WO-A1-2012/161080
WO-A1-2012/161081     WO-A1-2012/161081
WO-A1-2013/176042

• YUYA SAITO ET AL: "Non-Orthogonal Multiple Access (NOMA) for Cellular Future Radio Access", 2013 IEEE 77TH VEHICULAR TECHNOLOGY CONFERENCE (VTC SPRING), 1 June 2013 (2013-06-01), pages 1-5, XP055197795, DOI: 10.1109/VTCSpring.2013.6692652 ISBN: 978-1-46-736337-2
• YOSHIHISA KISHIYAMA ET AL.: 'Initial Views on Non-orthogonal Multiple Access Based Radio Interface for Future Radio Access' IEICE TECHNICAL REPORT vol. 111, no. 145, 14 July 2011, pages 37 - 42, XP055197795
• YUYA SAITO ET AL.: 'Evaluation of Downlink System-level Performance for Non-Orthogonal Multiple Access (NOMA' IEICE TECHNICAL REPORT vol. 112, no. 443, 20 February 2013, pages 249 - 254, XP055302332

**Description**

Technical Field

The present invention relates to a radio base station, a user terminal, a radio communication method and a radio communication system in a next-generation mobile communication system.

Background Art

EP 2 139 186 A1 relates to a method for decoding a composite radio signal at a receiver said composite radio signal being a superposition of at least two signals sent by at least one transmitter, each signal being transmitted using the same radio resource on a set of frequency subchannels of an OFDM system.

WO 2012/161081 A1 discloses a reception device, a transmission device, and a wireless communications method that are capable of utilizing non-orthogonal multi-access while suppressing both cost increases and processing delays.

Conventionally, various radio access schemes are used in radio communication systems. For example, in UMTS (Universal Mobile Telecommunication System), which is also referred to as "W-CDMA (Wideband Code Division Multiple Access)," code division multiple access (CDMA) is used. Also, in LTE (Long Term Evolution), orthogonal frequency division multiple access (OFDMA) is used (see, for example, non-patent literature 1).

Citation List

Non-patent Literature

Non-Patent Literature 1: 3GPP TR 25.913 "Requirements for Evolved UTRA and Evolved UTRAN"

Summary of Invention

Technical Problem

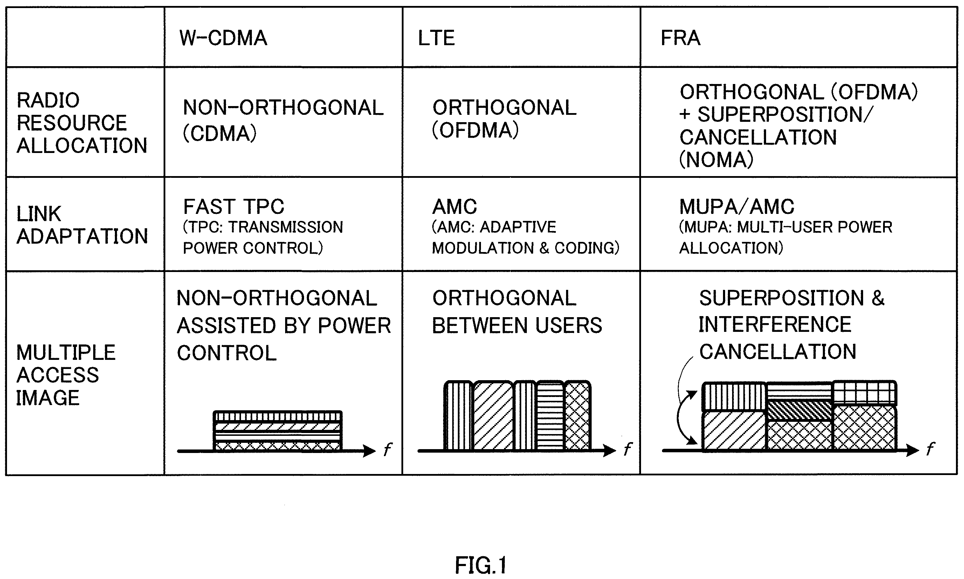

Now, as shown in FIG. 1, the radio communication scheme called "FRA" (Future Radio Access) and so on is under study as a successor of W-CDMA and LTE. In FRA, in addition to OFDMA, the use of non-orthogonal multiple access (NOMA), which is premised upon canceling interference (interference cancellation) on the receiving side, as a downlink radio resources allocation scheme, is anticipated.

In FRA, downlink signals for a plurality of user terminals are superposed over the same radio resource allocated by OFDMA, and transmitted with different transmission power depending on each user terminal's channel gain. On the receiving side, the downlink signal for a subject terminal is extracted adequately by cancelling the downlink signals for the other user terminals.

Also, as for link adaptation in each radio communication scheme, W-CDMA uses transmission power control (Fast TPC), and LTE uses adaptive modulation and coding (AMC), which adjusts the modulation scheme and coding rate adaptively. In FRA, the use of transmission power allocation and adaptive modulation and coding for multiple users (MUPA: Multi-User Power Allocation/AMC) is under study.

When NOMA is used, a user terminal, in order to adequately acquire the information for the subject terminal, can judge the order of decoding of received signals, whether or not to apply SIC, and so on, based on each user terminal's power allocation information. However, if the number of user terminals to be non-orthogonal-multiplexed over the same radio resource increases, the communication overhead pertaining to the reporting of power allocation information from the radio base station to the user terminals increases, and therefore the throughput decreases. Consequently, the method to realize non-orthogonal multiplexing while reducing the decrease of throughput is in demand.

The present invention has been made in view of the above, and it is therefore an object of the present invention to provide a user terminal, a radio base station, a radio communication method and a radio communication system that can realize non-orthogonal multiple access while reducing the decrease of throughput.

Solution to Problem

The problem of the invention is solved by the subject-matter of the independent claims. Advantageous embodiments are disclosed by the dependent claims.

A radio base station, according to an example, has a selection section that selects a predetermined decoding pattern, based on channel state information of a user terminal, from among a plurality of decoding patterns in which information regarding the order of decoding of non-orthogonal multiple access signals and/or whether or not SIC (Successive Interference Cancellation) is applied is defined, and a transmission section that transmits information to represent the selected decoding pattern to the user terminal.

Advantageous Effects of Invention

According to the present invention, it is possible to realize non-orthogonal multiple access while reducing the decrease of throughput.

Brief Description of Drawings

FIG. 1 is a diagram to explain radio access schemes used in various radio communication systems;
FIG. 2 is a diagram to explain NOMA (non-orthogonal multiple access) and SIC (Successive Interference Canceller) on the downlink;
FIG. 3 is a diagram to show a flowchart of the transmission process in NOMA;
FIG. 4 is a diagram to show a flowchart of the process according to the first example;
FIG. 5 is a diagram to show common decoding patterns that are used when the maximum number of user terminals to be non-orthogonal-multiplexed is two, according to the first example;
FIG. 6 is a diagram to show common decoding patterns that are used when the maximum number of user terminals to be non-orthogonal-multiplexed is three, according to the first example;
FIG. 7 is a diagram to show a flowchart of the process according to the second example;
FIG. 8 is a diagram to show individual decoding patterns that are used when the maximum number of user terminals to be non-orthogonal-multiplexed is two, according to the second example;
FIG. 9 is a diagram to show individual decoding patterns that are used when the maximum number of user terminals to be non-orthogonal-multiplexed is three, according to the second example;
FIG. 10 is a diagram to show a schematic structure of a radio communication system according to the present embodiment;
FIG. 11 is a block diagram to show an example structure of a radio base station according to the present embodiment;
FIG. 12 is a block diagram to show an example structure of a user terminal according to the present embodiment; and
FIG. 13 is a block diagram to show example structures of baseband signal processing sections provided in a radio base station and a user terminal, according to the present embodiment.

Description of Embodiments

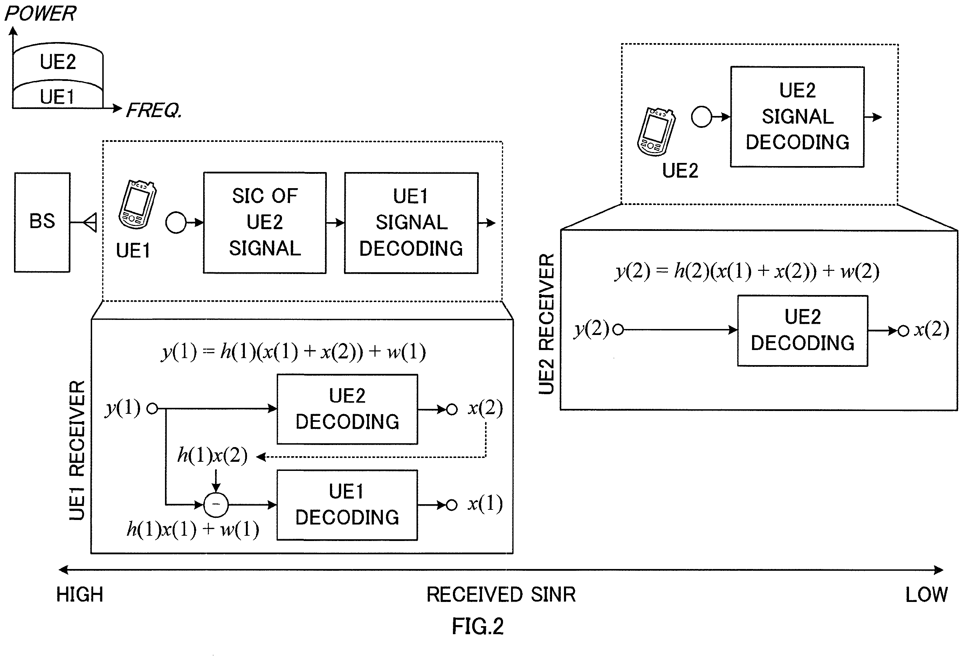

FIG. 2 is a diagram to explain NOMA and SIC on the downlink. FIG. 2 shows a case where, in the coverage area of a radio base station BS, a user terminal UE 1 is located near the radio base station BS and a user terminal UE 2 is located far from the radio base station BS. The path loss of downlink signals from the radio base station BS to each user terminal UE increases with the distance from the radio base station BS. Consequently, the received SINR (Signal to Interference plus Noise Ratio) at the user terminal UE 2 that is located far from the radio base station BS becomes lower than the received SINR at the user terminal UE 1 that is near the radio base station BS.
In NOMA, a plurality of user terminals UE are non-orthogonal-multiplexed over the same radio resource by applying varying transmission power depending on channel gain (for example, the received SINR, the RSRP (Reference Signal Received Power), etc.), path loss and so on. For example, in FIG. 2, downlink signals for the user terminals UE 1 and UE 2 are multiplexed over the same radio resource, with different transmission power. Also, the downlink signal for the user terminal UE 1 where the received SINR is high is allocated relatively small transmission power, and the downlink signal for the user terminal UE 2 where the received SINR is low is allocated relatively large transmission power.
Also, in NOMA, the downlink signal for a subject terminal is extracted by cancelling interference signals from received signals, by means of SIC, which is a successive interference canceller-based signal separation method. For the downlink signal for the subject terminal, downlink signals for other terminals that are non-orthogonal-multiplexed over the same radio resource, and that use greater transmission power than the subject terminal become interference signals. Consequently, the downlink signal for the subject terminal is extracted by cancelling the downlink signals for the other user terminals UE with greater transmission power than the subject terminal.
For example, referring to FIG. 2, the received SINR of the user terminal UE 2 is lower than the received SINR of the user terminal UE 1, and therefore the downlink signal for the user terminal UE 2 is transmitted with greater transmission power than the downlink signal for the user terminal UE 1. Consequently, the user terminal UE 1 located near the radio base station BS not only receives the downlink signal for the subject terminal, but also receives the downlink signal for the user terminal UE 2 that is non-orthogonal-multiplexed over the same radio resource, as an interference signal. The user terminal UE 1 extracts and adequately decodes the downlink signal for the subject terminal by canceling the downlink signal for the user terminal UE 2 by means of SIC.

Meanwhile, the received SINR at the user terminal UE 1 is higher than the received SINR at the user terminal UE 2, so that the downlink signal for the user terminal UE 1 is transmitted with smaller transmission power than the downlink signal for the user terminal UE 2. Consequently, the user terminal UE 2 that is located far from the radio base station BS can ignore the interference by the downlink signal for the user terminal UE 1 that is non-orthogonal-multiplexed over same radio resource, and therefore extracts and adequately decodes the downlink signal for the subject terminal without carrying out interference cancellation by means of SIC.

In this way, when NOMA is applied to the downlink, a plurality of user terminals UE 1 and UE 2 with varying channel gains can be multiplexed over the same radio resource, so that it is possible to improve the spectral efficiency.

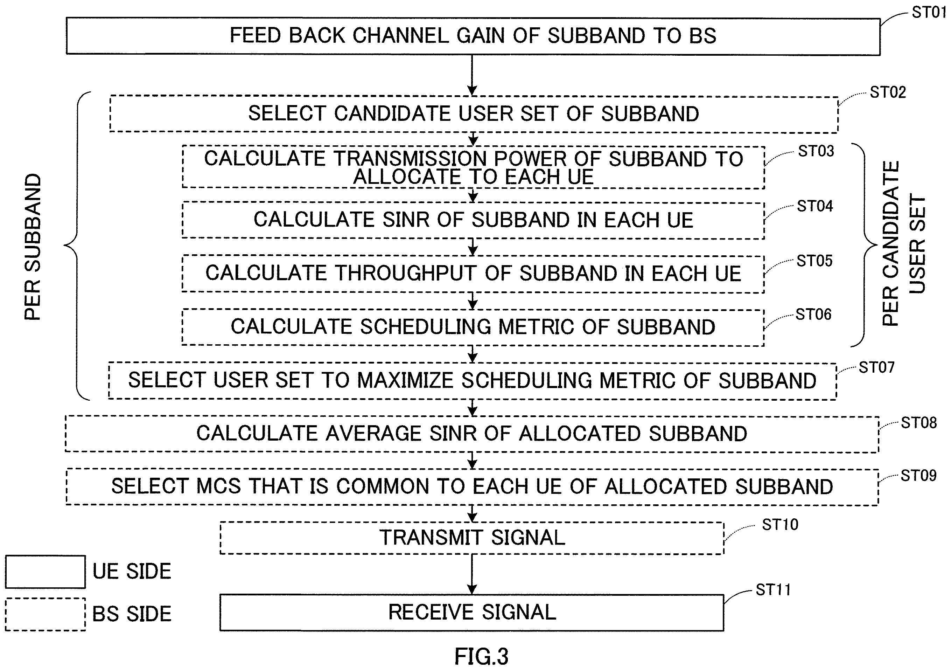

Now, the transmission process in NOMA will be described. FIG. 3 is a flowchart to explain the transmission process in NOMA. First, each user terminal (UE) receives a reference signal from the radio base station (BS), and estimates channel gain based on this reference signal. Then, each user terminal feeds back the channel gain to the radio base station (step ST01). Note that, for the reference signal, the CSI-RS (Channel State Information Reference Signal), the DM-RS (DeModulation Reference Signal), the CRS (Cell-specific Reference Signal) and so on may be used.

Next, the radio base station selects a group of candidate user sets, on a per subband basis, from all the user terminals that belong in the coverage area (step ST02). A candidate user set refers to a combination of candidate user terminals that are non-orthogonal-multiplexed over a subband. The total number of candidate user sets per subband is represented by following equation 1, where the total number of user terminals that belong to the coverage area is M and the number of user terminals to be non-orthogonal-multiplexed is N. Note that the following operation process sequence (step ST03 to ST06) is carried out for all the candidate user sets (exhaustive search).

[1]

$$\binom{M}{N} \qquad \dots (\text{Equation 1})$$

Next, the radio base station calculates the transmission power of the subband to allocate to each user terminal in the candidate user sets, based on the channel gain that is fed back from each user terminal (step ST03). Next, the radio base station calculates the SINR (the SINR for scheduling) of each user terminal's subband, anticipated under the application of non-orthogonal-multiplexing (step ST04), based on the transmission power that is calculated. Next, the radio base station determines the block error rate (BLER: Block Error Rate) of the MCS (Modulation and Coding Scheme) set from the SINR that is calculated, and calculates the scheduling throughput of each user terminal's subband (step ST05).

Next, from each user terminal's instantaneous throughput and average throughput, the radio base station calculates the scheduling metric of the candidate user set (step ST06). For the scheduling metric, for example, the PF (Proportional Fairness) scheduling metric may be calculated. The PF scheduling metric $M_{sj,b}$ is represented by following equation 2, where the average throughput is $T_k$ and the instantaneous throughput is $R_{k,b}$. Note that the PF scheduling metric $M_{sj,b}$ represents the PF scheduling metric of the j-th candidate user set in the b-th subband. Also, k denotes the k-th user terminal in a candidate user set.

[2]

$$M_{S_j,b} = \sum_{k \in S_j} \frac{R_{k,b}(t)}{T_k(t)} \qquad \dots (\text{Equation 2})$$

The radio base station selects the user set that maximizes the scheduling metric in a subband by carrying out steps ST03 to ST06 for all the candidate user sets (step ST07). Then, the radio base station carries out steps ST02 to ST07 on a per subband basis, and selects the user set to maximize the scheduling metric with respect to each subband.

Next, the radio base station calculates the average SINR of a subband that is allocated (step ST08), and selects an MCS that is common to each user terminal of the allocated subband (step ST09). Next, the radio base station allocates the downlink signals for the user terminals constituting a user set to the same subband, and non-orthogonal-multiplexes and transmits the downlink signals to each user terminal with transmission power that varies on a per subband basis (step ST10).

Next, each user terminal that is selected by the radio base station as being in a user set not only receives the downlink signal for the subject terminal, but also receives the downlink signals for other terminals that are non-orthogonal-multiplexed over the same radio resource (step ST11). Then, each user terminal cancels the downlink signals for other terminals with lower channel gain and greater transmission power than the subject terminal by means of SIC, and extracts (separates) the signal for the subject terminal. In this case, the downlink signals for other terminals with higher channel gain and lower transmission power than the subject terminal do not become interference signals, and are therefore ignored.

Now, in NOMA, each user terminal can measure channel gain, signal power and so on, from the reference signals included in received signals, and decides the decoding pattern of the received signals (the order of decoding and/or whether or not to apply SIC) based on these. However, if the decisions are made based on measurements, a failed measurement might lead to the use of the wrong decoding pattern, which gives a threat of deteriorated reception performance. Also, it is equally possible to report power allocation information (for example, the transmission power that is calculated in step ST03) of the signal for each user terminal from the radio base station to the user terminal, and decide the decoding pattern based on this power allocation information. For example, it is possible to determine whether or not to cancel the signal for each user terminal by means of SIC, depending on the magnitude of transmission power. However, if the number of user terminals to be non-orthogonal-multiplexed over the same radio resource increases, the communication overhead pertaining to the reporting of power allocation information also increases, and the problem arises that the throughput decreases.

In communication using NOMA, given the above problem that the overhead of communication increases when power allocation information is reported from the radio base station, the present inventors have thought that the configuration to report information representing a decoding pattern to each user terminal might realize non-orthogonal multiple access while reducing the decrease of throughput, and made the present invention. That is, the present invention prepares, in advance, a plurality of decoding patterns, in which information regarding the order of decoding of non-orthogonal multiple access signals and/or whether or not to apply SIC (Successive Interference Cancellation) is defined, selects suitable decoding patterns depending on each user terminal's communication environment, and transmits these decoding patterns to each user terminal.

(First Example)

Now, a first example of the present embodiment will be described below. With the first example, a radio base station transmits information that represents a common decoding pattern, to each user terminal whose signal is non-orthogonal-multiplexed over the same radio resource. Also, with the first example, a plurality of decoding patterns are configured so that the order of decoding of each user terminal is specified uniquely. Furthermore, each user terminal is configured to be able to identify the user terminals whose signals are non-orthogonal-multiplexed over the same radio resource.

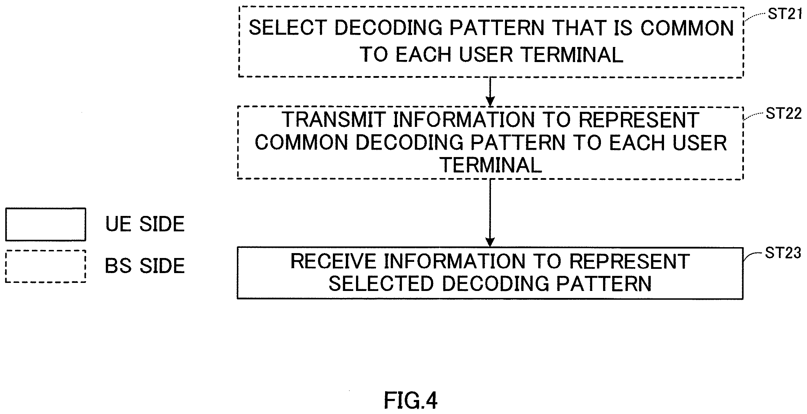

FIG. 4 is a diagram to show a flowchart of the operation according to the first example. First, the radio base station selects a decoding pattern that is common to each user terminal, based on each user terminal's channel state information (step ST21). For the decoding pattern, at least, information regarding the order of decoding of non-orthogonal multiple access signals and/or whether or not SIC is applied is defined. For example, when there are user terminals UE 1 and UE 2 and the UE 1 is designated to be decoded first and the UE 2 is designated to be decoded second according to the order of decoding, after the signal for the UE 1 is decoded, the signal for the UE 2 is decoded. Note that the decoding pattern may not be selected based on channel state information itself, but may be selected based on information that is determined using channel state information, channel gain and so on. For example, the decoding pattern may be selected based on the transmission power of the signal for each user terminal, and so on.

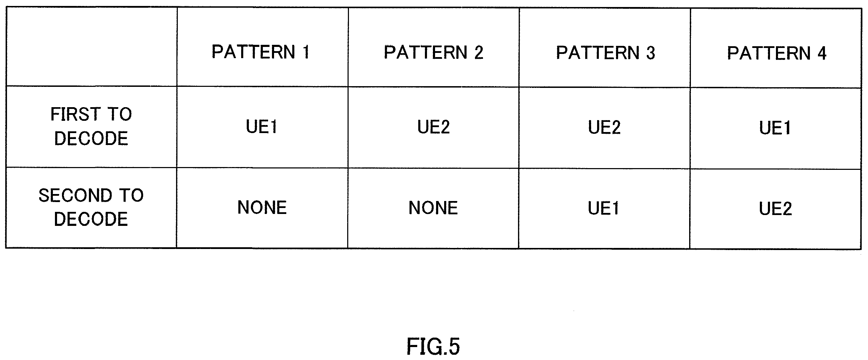

FIG. 5 is a diagram to show decoding patterns that are used when the maximum number of user terminals to be non-orthogonal-multiplexed is two. FIG. 5 shows four decoding patterns (patterns 1 to 4). When "NONE" is shown in the order of decoding, this means that nothing is decoded, and, for example, in the pattern 1, decoding for the UE 1 alone is carried out. In the pattern 3, after decoding for UE 2 is carried out, decoding for UE 1 is performed. Note that FIG. 5 only shows examples of decoding pattern configurations, and different decoding pattern configurations may be used as well.

It is equally possible to employ a configuration, in which the decoding patterns do not expressly include information regarding the order of decoding or whether or not SIC is applied, and in which a user terminal determines this information from information of the decoding patterns and/or from information besides the decoding patterns. With the present embodiment, the decoding patterns show the order of decoding of non-orthogonal multiple access signals, and whether or not to apply SIC is decided from the order of decoding. To be more specific, a user terminal does not apply SIC when the subject terminal alone is included in the order of decoding represented by a decoding pattern (for example, as in the patterns 1 and 2 in FIG. 5), and applies SIC, when terminals other than the subject terminal are included in the order of decoding (for example, as in the patterns 3 and 4 in FIG. 5), after the signals for the other terminals are decoded.

Meanwhile, it is equally possible to employ a configuration, in which the decoding patterns only include information as to whether or not the user terminals apply SIC, and the user terminals judge the order of decoding. For example, if the radio base station transmits information to the effect that SIC is not applied, to the UE 1, while the UE 1 is performing interference cancellation and decoding of received signals based on the pattern 3 of FIG. 5, the UE 1 has to decode only the signal for the subject terminal, and therefore can decide to use the pattern 1.

Note that, with the present embodiment, the radio base station and each user terminal are configured to be able to refer to the same decoding pattern. To be more specific, information regarding the same multiple decoding patterns may be held in advance in the respective storage fields of the radio base station and the user terminals. Also, the radio base station and the user terminals may be configured to be able to refer to the same decoding pattern as appropriate by changing the decoding patterns and reporting information regarding the changed decoding patterns to each other.

Next, information to represent the selected common decoding pattern is transmitted to each user terminal (step ST22). In the event of FIG. 2 described above, information to represent the pattern 3 of FIG. 5 is transmitted to each user terminal on a shared basis. This information may be transmitted in the form of a bit sequence. For example, when the four decoding patterns shown in FIG. 5 are defined, it is possible to represent the information that shows the selected decoding pattern in a bit sequence of two bits, and transmit one of these bit sequences. Also, the information can be transmitted using, for example, signaling by means of PDCCH (Physical Downlink Control Channel) and EPDCCH (Enhanced PDCCH or Extended PDCCH) control information, and higher layer signaling (RRC signaling, etc.). In particular, signaling by means of PDCCH or EPDCCH control information can be reported easily on a per subband basis or on a per user terminal basis, and is suitable for this reporting. Note that, accompanying the transmission of information in step ST22, information regarding the transmission power for each user terminal (for example, transmission power ratio, etc.) may be transmitted.

Finally, each user terminal receives the information to represent a specific decoding pattern, transmitted from the radio base station (step ST23). Using this information, each user terminal performs interference cancellation and decoding of received signals, depending on the order of decoding and whether or not SIC is applied, as shown in the decoding pattern selected by the radio base station.

With the first example, the process according to the flowchart shown in FIG. 4 is carried out when the relationship between the user terminals' channel states changes in step ST01 of FIG. 3 (when a specific terminal's channel state improves, etc.). However, this is by no means limiting, and this process can be performed when, for example, the number of user terminals to be non-orthogonal-multiplexed over the same radio resource increases or decreases, the transmission power for a user terminal changes, a predetermined period of time passes after a decoding pattern is transmitted to a user terminal, and so on.

Note that, with the present embodiment, each user terminal identifies user terminals based on the DM-RS port that is assigned to each user terminal by the radio base station. The DM-RS (DeModulation Reference Signal) is a signal which the radio base station inserts upon transmitting the PDSCH, so that the user terminals can carry out channel estimation, which is required in demodulation. In particular, in MIMO (Multi Input Multi Output) transmission to use a plurality of antennas, DM-RSs may be transmitted using varying DM-RS ports on a per user terminal basis. For example, when two of DM-RS port 1 and port 2 are available for use as DM-RS ports, it may be possible to decide that the UE 1 is the terminal to use the DM-RS port 1 and that the UE 2 is the terminal to use the DM-RS port 2. However, the identification of the user terminals is by no means limited to this. For example, it is possible to report information regarding the transmission power from the radio base station to each user terminal (transmission power ratio, etc.) by using higher layer signaling (for example, RRC signaling), and identify the user terminals based on this information. Furthermore, the radio base station may expressly report, to each user terminal, which terminal in a decoding pattern the user terminal is.

Using the case of FIG. 2 as an example, the operation of the first example will be described. In the event of FIG. 2, the pattern 3 shown in FIG. 5 is selected for each user terminal (step ST21). Then, information to represent the pattern 3 is reported to each UE on a shared basis (step ST22), and each UE receives this information (step ST23). In this case, given that the UE 2 is designated to be decoded first, the UE 1 decodes the signal for the UE 2 first. Next, since the UE 2 is not the subject terminal, the signal for the UE 2 is canceled by means of SIC. Finally, the signal for the UE 1 is decoded from the signal to which SIC is applied. On the other hand, since the UE 2 (the subject terminal) is intended to be decoded first, the UE 2 decodes the signal for the UE 2. Although the UE 1 is indicated to be decoded second, the signal for the subject terminal is already decoded, and therefore this process is not performed. That is, the UE 2 in effect ignores the signal for the UE 1 as noise.

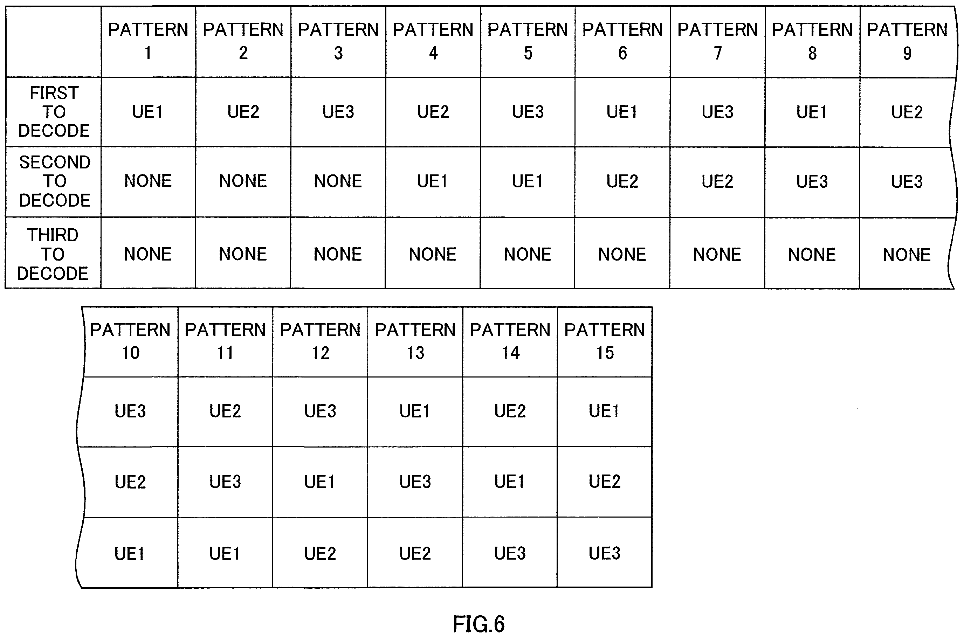

FIG. 6 is a diagram to show decoding patterns that are used when the maximum number of user terminals to be non-orthogonal-multiplexed is three. FIG. 6 shows fifteen decoding patterns (patterns 1 to 15), and information to represent the decoding patterns can be represented in a bit sequence of four bits. Note that, although FIG. 5 and FIG. 6 show examples where information to represent a plurality of decoding patterns is each formed with the same number of bits, this information may be formed with different bit sequences as well. For example, in FIG. 6, by representing the patterns 1 to 3 in bit sequences of two bits and representing the patterns 4 to 15 in bit sequences of four bits, it is possible to reduce the amount of information when the patterns 1 to 3 are reported.

As described above, the radio base station according to the first example of the present embodiment can judge the order of decoding of signals and whether or not SIC is applied, based on information to represent a decoding pattern that is common to each user terminal and require a small amount of communication, so that it is possible to realize non-orthogonal multiple access while reducing the decrease of throughput.

(Second Example)

Now, a second example of the present embodiment will be described below. With the second example, the radio base station transmits information, in which decoding patterns that are defined individually, on a per user terminal basis, are represented, to each user terminal whose signal is non-orthogonal-multiplexed over the same radio resource. Although, with the above first example, the order of decoding of each user terminal is specified uniquely in the decoding patterns, with the second example, a plurality of decoding patterns are configured so that at least the order of decoding of the user terminals receiving these decoding patterns can be specified. Now, the second example will be described primarily with reference to the differences from the first example.

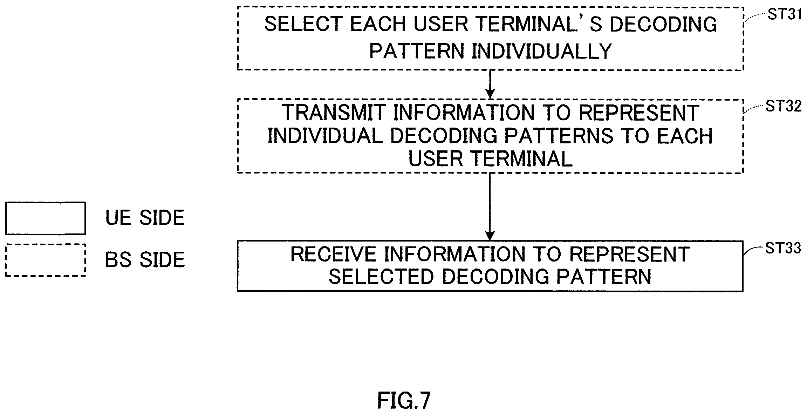

FIG. 7 is a diagram to show a flowchart of the operation according to the second example. First, the radio base station selects each user terminal's decoding pattern, individually, based on each user terminal's channel state information (step ST31). The second example is configured so that a plurality of decoding patterns are defined individually on a per user terminal basis.

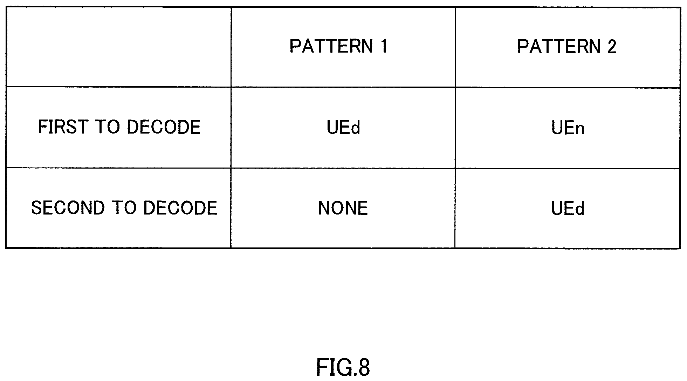

FIG. 8 is a diagram to show decoding patterns that are used when the maximum number of user terminals to be non-orthogonal-multiplexed is two, and shows two decoding patterns (patterns 1 and 2). Here, "UEd" is the desired user terminal (UE-desired), whose signal is wanted to be received and adequately decoded in the end, and, that is, indicates the user terminal having received the decoding pattern itself. Meanwhile, "UEn" means an undesired user terminal (UE-non-desired), and, that is, indicates a user terminal other than the user terminal having received the decoding pattern, among the user terminals whose signals are non-orthogonal-multiplexed over the same radio resource. Note that information to represent the decoding patterns of FIG. 8 can be represented in one bit.

Next, information to represent the individual decoding pattern that is selected, is transmitted to each user terminal (step ST32). Finally, each user terminal receives the information to represent the specific decoding pattern, transmitted from the radio base station (step ST33).

With the case of FIG. 2 as an example, the operation of the second example will be described. In the event of FIG. 2, the pattern 2 of FIG. 8 is selected for the UE 1, and the pattern 1 of FIG. 8 is selected for the UE 2 (step ST31). Then, information to represent the pattern 2 is reported to the UE 1 and information to represent the pattern 1 is reported to the UE 2 (step ST32), so that each UE receives its information (step ST33). The UE 1, to which the pattern 2 designating the UEn to be decoded first, is reported, first decodes the signal for the UE 2 and cancels this by means of SIC, because, for the UE 1, the UE 2 is a UEn. After that, the second to be decoded is the UEd, which is the subject terminal, so that the signal for the UE1 is decoded from the signal where SIC is applied. On the other hand, the UE 2, to which the pattern 1 is reported, decodes the UE 2, because the first to be decoded is the UEd, which is the subject terminal. The second to be decoded is "NONE," so that no process is carried out.

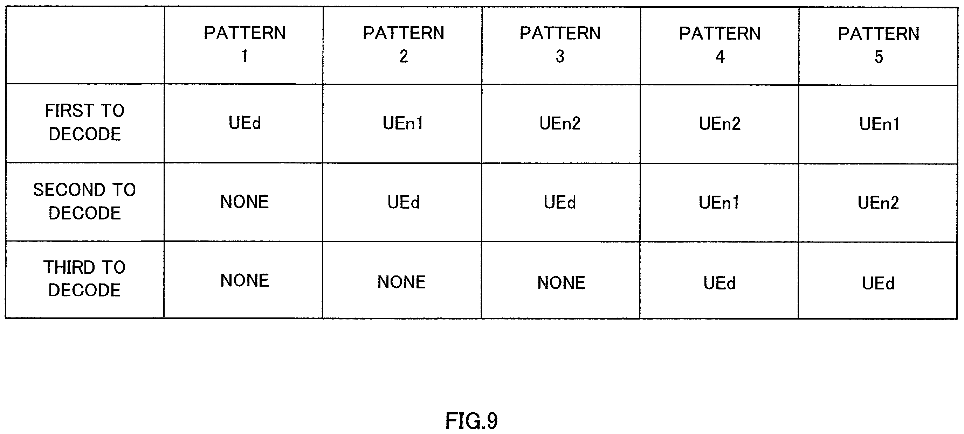

FIG. 9 is a diagram to show decoding patterns that are used when the maximum number of user terminals to be non-orthogonal-multiplexed is three. FIG. 9 shows five decoding patterns (patterns 1 to 5), and information to represent the decoding patterns can be represented in bit sequences of three bits. Here, the UEn1 and the UEn2 each represent an undesired user terminal. Here, when a plurality of undesired user terminals are present, each UEn may be identified based on, for example, the DM-RS port that is assigned by the radio base station. Also, it is equally possible to measure the intensity of individual reference signals, and decide that the signal of the lowest intensity is for the UEd, that the rest of the signals are for the UEn1, the UEn2 and so on, in descending order of intensity. As clear from the comparison between FIG. 5 and FIG. 8, and between FIG. 6 and FIG. 9, With the second example, compared to the first example, in the event there are the same maximum number of user terminals, it is possible to reduce the amount of information with respect to the information representing the decoding patterns.

As described above, with the radio base station according to the second example of the present embodiment, it is possible to use even less reporting information, so that it is possible to realize non-orthogonal multiple access while more adequately reducing the decrease of throughput.

(Example Structure of Radio Communication System)

Now, the structure of the radio communication system according to the present embodiment will be described below. In this radio communication system, the above-described decoding pattern reporting methods for non-orthogonal multiple access are employed.

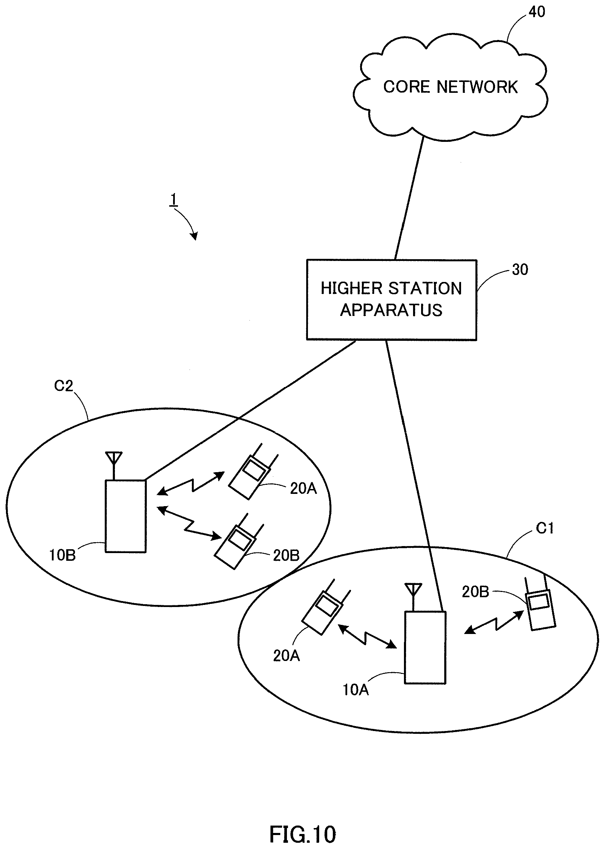

FIG. 10 is a diagram to show a schematic structure of the radio communication system according to the present embodiment. Note that the radio communication system shown in FIG. 10 is a system to accommodate, for example, the LTE system or the LTE-A system (LTE-Advanced). This radio communication system may be referred to as "IMT-advanced," or may be referred to as "4G" or "FRA (Future Radio Access)."

The radio communication system 1 shown in FIG. 10 includes radio base stations 10 (10A and 10B) and a plurality of user terminals 20 (20A and 20B) that communicate with these radio base stations 10. The radio base stations 10 are connected with a higher station apparatus 30, and this higher station apparatus 30 is connected with a core network 40. Each user terminal 20 can communicate with the radio base stations 10 in cells C1 and C2. Note that the higher station apparatus 30 may be, for example, an access gateway apparatus, a radio network controller (RNC), a mobility management entity (MME) and so on, but is by no means limited to these.

The radio base stations 10 may be eNodeBs (eNBs) that form macro cells, or may be any of RRHs (Remote Radio Heads), femto base stations, pico base stations and so on, that form small cells. Also, the radio base stations 10 may be referred to as "transmitting/receiving points" and so on. The user terminals 20 are terminals to support various communication schemes such as LTE, LTE-A and so on, and may include both mobile communication terminals and fixed communication terminals.

In the radio communication system 1, as radio access schemes, OFDMA (Orthogonal Frequency Division Multiple Access) and NOMA (Non-Orthogonal Multiple Access) are applied to the downlink, and SC-FDMA (Single-Carrier Frequency Division Multiple Access) is applied to the uplink. OFDMA is a multi-carrier transmission scheme to divide the transmission band into subbands and orthogonal-multiplex user terminals 20, and NOMA is a multi-carrier transmission scheme to non-orthogonal-multiplex user terminals 20 with varying transmission power on a per subband basis. SC-FDMA is a single-carrier transmission scheme to allocate user terminals 20 to radio resources that are continuous in the frequency direction.

Also, in the radio communication system 1, as downlink communication channels, a downlink shared data channel (PDSCH (Physical Downlink Shared Channel)), which is used by each user terminal 20 on a shared basis, downlink L1/L2 control channels (PDCCH (Physical Downlink Control Channel), PCFICH (Physical Control Format Indicator Channel), PHICH (Physical Hybrid-ARQ Indicator Channel), EPDCCH (Enhanced Physical Downlink Control Channel)), a broadcast channel (PBCH (Physical Broadcast Channel)) and so on are used. User data and higher control information are transmitted by the PDSCH. Scheduling information for the PDSCH and the PUSCH is transmitted by the PDCCH and the EPDCCH. The number of OFDM symbols to use for the PDCCH is transmitted by the PCFICH. HARQ ACKs/NACKs in response to the PUSCH are transmitted by the PHICH.

Also, in the radio communication system 1, as uplink communication channels, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used. User data and higher control information are transmitted by the PUSCH. Also, by the PUCCH or the PUSCH, downlink channel state information (CSI (Channel State Information)), ACKs/NACKs and so on are transmitted.

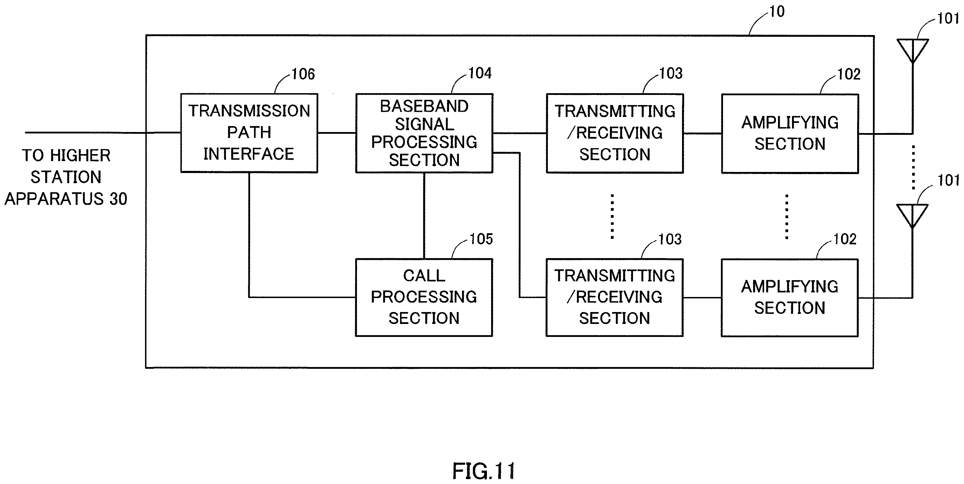

FIG. 11 is a block diagram to show an example structure of a radio base station according to the present embodiment. The radio base station 10 has transmitting/receiving antennas 101, amplifying sections 102, transmitting/receiving sections (transmitting sections) 103, a baseband signal processing section 104, a call processing section 105 and a transmission path interface 106.

User data to be transmitted from the radio base station 10 to the user terminal 20 on the downlink is input from the higher station apparatus 30, into the baseband signal processing section 104, via the transmission path interface 106.

In the baseband signal processing section 104, the input user data is subjected to a PDCP (Packet Data Convergence Protocol) layer process, division and coupling of the user data, RLC (Radio Link Control) layer transmission processes such as an RLC retransmission control transmission process, MAC (Medium Access Control) retransmission control (for example, an HARQ transmission process), scheduling, transport format selection, channel coding, an IFFT (Inverse Fast Fourier Transform) process and a pre-coding process, and the result is transferred to each transmitting/receiving section 103. Also, downlink control data is subjected to transmission process such as channel coding and an inverse fast Fourier transform, and transferred to each transmitting/receiving section 103.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, data to be transmitted from the user terminal 20 to the radio base station 10 on the uplink is received in each transmitting/receiving antenna 101 and input in the amplifying sections 102. The amplifying sections 102 amplify the radio frequency signals input from each transmitting/receiving antennas 101, and send the results to the transmitting/receiving sections 103. The amplified radio frequency signals are subjected to frequency conversion in each transmitting/receiving section 103, and input in the baseband signal processing section 104.

In the baseband signal processing section 104, the user data that is included in the input baseband signals is subjected to an FFT (Fast Fourier Transform) process, an IDFT (Inverse Discrete Fourier Transform) process, error correction decoding, a MAC retransmission control receiving process, and RLC layer and PDCP layer receiving processes, and the result is transferred to the higher station apparatus 30 via the transmission path interface 106. The call processing section 105 performs call processing such as setting up and releasing communication channels, manages the state of the radio base station 10 and manages the radio resources.

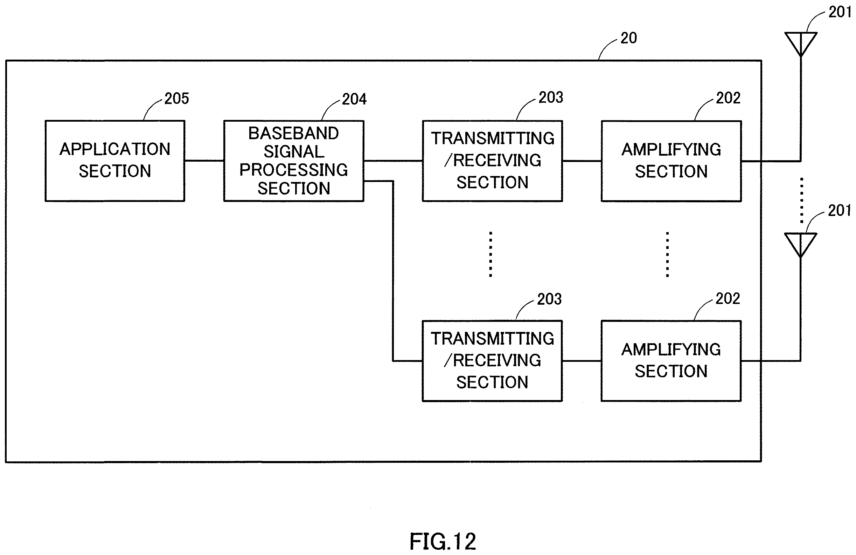

FIG. 12 is a block diagram to show an example structure of a user terminal according to the present embodiment. The user terminal 20 has a plurality of transmitting/receiving antennas 201, amplifying sections 202, transmitting/receiving sections (receiving sections) 203, a baseband signal processing section 204 and an application section 205.

Downlink data is received by a plurality of transmitting/receiving antennas 201 and input in the amplifying sections 202. The amplifying sections 202 amplify the radio frequency signals that are input in the transmitting/receiving antennas 201, and sent to each transmitting/receiving section 203. The radio frequency signals are converted into baseband signals in each transmitting/receiving section 203, and input in the baseband signal processing section 204. The baseband signal processing section 204 applies receiving process such as an FFT process, error correction decoding, a retransmission control receiving process and so on, to the baseband signals. The user data that is included in the downlink data is transferred to the application section 205. The application section 205 performs process related to higher layers above the physical layer and the MAC layer, and so on. In addition, in the downlink data, broadcast information is also transferred to the application section 205.

Meanwhile, uplink user data is input from the application section 205 into the baseband signal processing section 204. The baseband signal processing section 204 applies a retransmission control (HARQ (Hybrid ARQ)) transmission process, channel coding, pre-coding, a DFT process, an IFFT process and so on to the input user data, and transfers the result to each transmitting/receiving section 203. The baseband signals that are output from the baseband signal processing section 204 are converted into a radio frequency band in each transmitting/receiving section 203. After that, the amplifying sections 202 amplify the radio frequency signals having been subjected to frequency conversion, and transmit the results from the transmitting/receiving antennas 201.

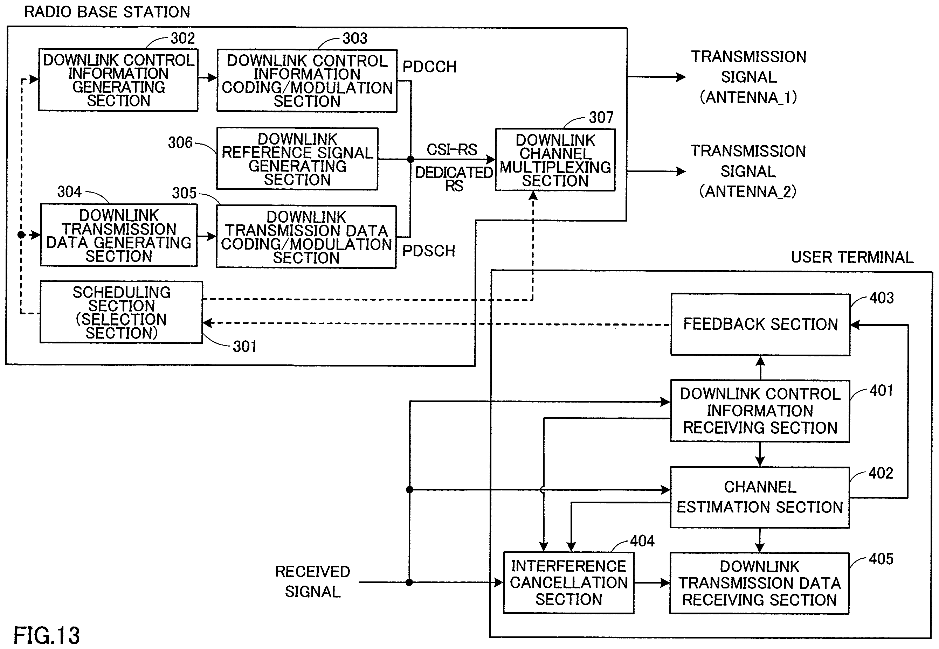

FIG. 13 is a block diagram to show an example structure of the baseband signal processing section provided in the radio base station and the user terminal according to the present embodiment. Note that, although FIG. 13 shows only part of the structures, the radio base station 10 and the user terminal 20 have required components without shortage.

As shown in FIG. 13, the radio base station 10 has a scheduling section (selection section) 301, a downlink control information generating section 302, a downlink control information coding/modulation section 303, a downlink transmission data generating section 304, a downlink transmission data coding/modulation section 305, a downlink reference signal generating section 306 and a downlink channel multiplexing section 307.

The scheduling section 301 determines the user sets to non-orthogonal-multiplex on given radio resources, depending on the channel gain of each user terminal 20. As for the user sets, for example, in each subband, the user set to maximize the PF (Proportional Fairness) scheduling metric is selected. The channel state information that is fed back from the user terminal 20 is received in the transmitting/receiving section 103 (see FIG. 11) and used in the scheduling section 301. Note that the channel gain included in the channel state information has only to show the received quality of the channels, and may be the CQI, the received SINR, the RSRP, the instantaneous value, or the long-term average value. Also, the channel gain is not limited to information that is fed back from the user terminals. For example, a channel gain may be determined by acquiring and using channel gains that are fed back to other radio base stations, or a channel gain may be determined from channel gains that are fed back from user terminals near the user terminal of interest. Then, the scheduling section 301 allocates transmission power to each user terminal 20 to be non-orthogonal-multiplexed, per radio resource. Also, the scheduling section 301 determines the coding rates and modulation schemes of downlink data based on the channel state information from the user terminals 20.

Also, the scheduling section 301 selects a suitable decoding pattern for each user terminal 20 that is selected as being in the same user set, based on the channel state information. In the first example, a decoding pattern that is common to each user terminal 20 is selected, from a plurality of decoding patterns that are configured so that the order of decoding of each user terminal 20 is specified uniquely. By carrying out scheduling so that the DM-RS ports are allocated on a fixed basis depending on the location and channel gain of each user terminals 20, it is possible to specify each user terminal 20. Also, in the second example, a dedicated decoding pattern is selected for each user terminal 20, from a plurality of decoding patterns that are configured so that at least the order of decoding of the user terminals 20 to receive the decoding patterns can be specified.

The downlink control information generating section 302 generates user terminal-specific downlink control information (DCI), which is transmitted in the PDCCH or the EPDCCH. The downlink control information is output to the downlink control information coding/modulation section 303. The downlink control information coding/modulation section 303 carries out channel coding and modulation of the downlink control information. The modulated downlink control information is output to the downlink channel multiplexing section 307.

The user terminal-specific downlink control information includes a DL assignment, which is PDSCH allocation information, a UL grant, which is PUSCH allocation information, and so on. Also, the downlink control information includes control information for requesting a CSI feedback to each user terminals 20, information that is required in the receiving process of signals that are non-orthogonal-multiplexed, and so on. For example, the downlink control information may include information regarding the decoding patterns that are common and specific to each user terminals 20, or may include information regarding the transmission power to each user terminals 20 (transmission power ratio, etc.). However, information regarding decoding patterns and transmission power may be included in higher control information as well, which is reported through higher layer signaling (for example, RRC signaling).

The downlink transmission data generating section 304 generates downlink user data on a per user terminals 20 basis. The downlink user data that is generated in the downlink transmission data generating section 304 is output, with the higher control information, as downlink transmission data to be transmitted in the PDSCH, to the downlink transmission data coding/modulation section 305. The downlink transmission data coding/modulation section 305 carries out channel coding and modulation of the downlink transmission data for each user terminals 20. The downlink transmission data is output to the downlink channel multiplexing section 307.

The downlink reference signal generating section 306 generates downlink reference signals (the CRS, the CSI-RS, the DM-RS, etc.). The downlink reference signals are output to the downlink channel multiplexing section 307.

The downlink channel multiplexing section 307 combines the downlink control information, the downlink reference signals and the downlink transmission data (including the higher control information), and generates a downlink signal. To be more specific, in accordance with scheduling information that is reported from the scheduling section 301, the downlink channel multiplexing section 307 carries out non-orthogonal-multiplexing so that the downlink signals for a plurality of user terminals 20, selected in the scheduling section 301, are transmitted with predetermined transmission power. The downlink signal that is generated in the downlink channel multiplexing section 307 is transmitted towards the user terminals 20 via various transmission processes.

Meanwhile, the user terminal 20 has a downlink control information receiving section 401, a channel estimation section 402, a feedback section 403, an interference cancellation section 404 and a downlink transmission data receiving section 405. A downlink signal that is transmitted from the radio base station 10 is separated into the downlink control information, the downlink transmission data (including the higher control information) and the downlink reference signal, via various receiving processes. The downlink control information is input in the downlink control information receiving section 401, the downlink transmission data is input in the downlink transmission data receiving section 405 via the interference cancellation section 404, and the downlink reference signal is input in the channel estimation section 402. The downlink control information receiving section 401 demodulates the downlink control information and outputs the result to the channel estimation section 402, the feedback section 403, the interference cancellation section 404 and so on.

The channel estimation section 402 performs channel estimation based on the downlink reference signal and acquires channel gain. The channel gain that is acquired by channel estimation is included in channel state information and fed back to the radio base station 10 via the feedback section 403. As described earlier, in the radio base station 10, a suitable decoding pattern is selected for each user terminal 20, based on the channel state information. According to the first example, a decoding pattern that is common to each user terminal 20 is selected from a plurality of decoding patterns that are configured so that the order of decoding of each user terminal 20 is specified uniquely. Also, UEs in the decoding patterns used in the interference cancellation section 404 may be specified based on the allocation of DM-RS ports.

The interference cancellation section 404 decides the order of decoding of signals and whether or not to apply SIC, based on information that represents the decoding pattern and that is transmitted from the radio base station, and, when SIC is to be carried out, cancels the interference by downlink signals allocated to other terminals, in accordance with the order of decoding. Also, when information regarding the transmission power and/or the transmission power ratio of the radio base station 10 to each user terminal 20 is received, this information can be used in interference cancellation.

As described above, the radio communication system 1 according to the present embodiment can realize non-orthogonal multiple access while reducing the decrease of throughput by the configuration to report information that represents decoding patterns to each user terminal.

The present invention is by no means limited to the above embodiment and can be implemented in various modifications. For example, it is possible to adequately change the number of carriers, the carrier bandwidth, the signaling method, the number of processing sections, the order of processes and so on in the above description, without departing from the scope of the present invention, as defined by the appended claims.

**Claims**

1. A user terminal (UE, 20) comprising:

a receiving section (203) configured to receive a downlink signal comprising non-orthogonal multiple access, NOMA, downlink signals superposed over the same radio resource transmitted with different transmission power to a plurality of user terminals and information about whether or not successive interference cancellation, SIC, is applied to the downlink signal; and

an interference cancellation section configured to decode a signal for the user terminal from the downlink signals based on the information about whether or not SIC is applied to the downlink signal ,

wherein the interference cancellation section is configured to identify each of the user terminals based on a DMRS, Demodulation Reference Signal, port.

2. The user terminal according to claim 1, wherein the interference cancellation section is configured to decode the signal for the user terminal from the downlink signals based on the information about whether or not SIC is applied to the downlink signals and the DMRS port.

3. The user terminal according to claim 1 or 2, wherein information including the information about whether or not SIC is applied to the downlink signals are provided to the plurality of user terminals in same number of bits.

4. The user terminal according to any one of claims 1 to 3, wherein the receiving section is configured to receive the information about presence or absence of interference of the downlink signals by PDCCH, Physical Downlink Control Channel, or EPDCCH, Enhanced PDCCH.

5. A radio base station (10) comprising:

a transmission section (103) configured to transmit non-orthogonal multiple access, NOMA, downlink signals for a plurality of user terminals by superposing the downlink signals with different transmission power over the same radio resource;

a scheduling section configured to allocate a different DMRS, Demodulation Reference Signal, port to each of the plurality of user terminals,

wherein the transmission section (103) is configured to transmit information about whether or not successive interference cancellation, SIC, is applied to the downlink signal to each of the user terminals so that the user terminal decodes a signal for the user terminal from the downlink signals.

6. A radio communication method for a user terminal, comprising:

receiving non-orthogonal multiple access, NOMA, downlink signals superposed over the same radio resource transmitted with different transmission power to a plurality of user terminals and information about whether or not successive interference cancellation, SIC, is applied to the downlink signal;

decoding a signal for the user terminal from the downlink signals based on the information about whether or not SIC is applied to the downlink signal; and

identifying each of the user terminals based on a DMRS, Demodulation Reference Signal, port.

7. A radio communication system comprising: a user terminal (20) according to claim 1 and a radio base station (10) according to claim 5.

**Patentansprüche**

1. Benutzerendgerät (UE, 20), umfassend:

einen Empfangsabschnitt (203), der konfiguriert ist, um ein Downlinksignal, das nichtorthogonale Mehrfachzugriff-, NOMA-, Downlinksignale umfasst, die über die gleiche Funkressource überlagert sind, die mit einer unterschiedlichen Übertragungsleistung an eine Vielzahl von Benutzerendgeräten übertragen werden, und Informationen darüber zu empfangen, ob eine sukzessive Interferenzunterdrückung, SIC, auf das Downlinksignal angewendet wird oder nicht;

und

einen Interferenzunterdrückungsabschnitt, der konfiguriert ist, um ein Signal für das Benutzerendgerät von den Downlinksignalen basierend auf der Information darüber, ob die SIC auf das Downlinksignal angewendet wird oder nicht, zu dekodieren,

wobei der Interferenzunterdrückungsabschnitt konfiguriert ist, um jedes der Benutzerendgeräte basierend auf einem DMRS-, Demodulationsreferenzsignal-, Port zu identifizieren.

2. Benutzerendgerät nach Anspruch 1, wobei der Interferenzunterdrückungsabschnitt konfiguriert ist, um das Signal für das Benutzerendgerät von den Downlinksignalen basierend auf der Information darüber, ob eine SIC auf die Downlinksignale und den DMRS-Port angewendet wird oder nicht, zu dekodieren.

3. Benutzerendgerät nach Anspruch 1 oder 2, wobei Informationen einschließlich der Information darüber, ob eine SIC auf die Downlinksignale angewendet wird oder nicht, der Vielzahl von Benutzerendgeräten in einer gleichen Anzahl von Bits bereitgestellt sind.

4. Benutzerendgerät nach einem der Ansprüche 1 bis 3, wobei der Empfangsabschnitt konfiguriert ist, um die Information über ein Vorhandensein oder ein Nichtvorhandensein einer Interferenz der Downlinksignale durch einen PDCCH, physikalischer Downlinksteuerkanal, oder einen EPDCCH, verbesserter PDCCH, zu empfangen.

5. Funkbasisstation (10), umfassend:

einen Übertragungsabschnitt (103), der konfiguriert ist, um nichtorthogonale Mehrfachzugriff-, NOMA-, Downlinksignale für eine Vielzahl von Benutzerendgeräten durch Überlagern der Downlinksignale über die gleiche Funkressource mit einer unterschiedlichen Übertragungsleistung zu übertragen;
einen Planungsabschnitt, der konfiguriert ist, um jedem der Vielzahl von Benutzerendgeräten einen unterschiedlichen DMRS-, Demodulationsreferenzsignal-, Port zuzuweisen,
wobei der Übertragungsabschnitt (103) konfiguriert ist, um Informationen darüber, ob eine sukzessive Interferenzunterdrückung, SIC, auf das Downlinksignal angewendet wird oder nicht, an jedes der Benutzerendgeräte zu übertragen, sodass das Benutzerendgerät ein Signal für das Benutzerendgerät von den Downlinksignalen dekodiert.

6. Funkkommunikationsverfahren für ein Benutzerendgerät, umfassend:

Empfangen von nichtorthogonalen Mehrfachzugriff-, NOMA-, Downlinksignalen, die über die gleiche Funkressource überlagert sind, die mit einer unterschiedlichen Übertragungsleistung an eine Vielzahl von Benutzerendgeräten übertragen werden, und Informationen darüber, ob eine sukzessive Interferenzunterdrückung, SIC, auf das Downlinksignal angewendet wird oder nicht;
Dekodieren eines Signals für das Benutzerendgerät von den Downlinksignalen basierend auf der Information darüber, ob die SIC auf das Downlinksignal angewendet wird oder nicht; und
Identifizieren jedes der Benutzerendgeräte basierend auf einem DMRS-, Demodulationsreferenzsignal-, Port.

7. Funkkommunikationssytem, umfassend: ein Benutzerendgerät (20) nach Anspruch 1 und eine Funkbasisstation (10) nach Anspruch 5.

**Revendications**

1. Terminal d'utilisateur (UE, 20) comprenant :

une section de réception (203) configurée pour recevoir un signal de liaison descendante comprenant des signaux de liaison descendante d'accès multiple non orthogonal, NOMA, superposés sur la même ressource radio transmise avec une puissance de transmission différente à une pluralité de terminaux d'utilisateur, et des informations sur le fait qu'une suppression d'interférence successive, SIC, est ou non appliquée au signal de liaison descendante ; et
une section de suppression d'interférence configurée pour décoder un signal pour le terminal d'utilisateur à partir des signaux de liaison descendante sur la base des informations sur le fait qu'une SIC est ou non appliquée au signal de liaison descendante,
dans lequel la section de suppression d'interférence est configurée pour identifier chacun des terminaux d'utilisateur sur la base d'un port de signal de référence de démodulation, DMRS.

2. Terminal d'utilisateur selon la revendication 1, dans lequel la section de suppression d'interférence est configurée pour décoder le signal pour le terminal d'utilisateur à partir des signaux de liaison descendante sur la base des informations sur le fait qu'une SIC est ou non appliquée aux signaux de liaison descendante et du port DMRS.

3. Terminal d'utilisateur selon la revendication 1 ou 2, dans lequel des informations incluant des informations sur le fait qu'une SIC est ou non appliquée aux signaux de liaison descendante sont fournies à la pluralité de terminaux d'utilisateur dans un même nombre de bits.

**4.** Terminal d'utilisateur selon l'une quelconque des revendications 1 à 3, dans lequel la section de réception est configurée pour recevoir les informations sur une présence ou une absence d'interférence des signaux de liaison descendante par un canal physique de commande de liaison descendante, PDCCH, ou un PDCCH amélioré, EPDCCH.

**5.** Station de base radio (10) comprenant :

une section de transmission (103) configurée pour transmettre des signaux de liaison descendante d'accès multiple non orthogonal, NOMA, pour une pluralité de terminaux d'utilisateur en superposant les signaux de liaison descendante avec une puissance de transmission différente sur la même ressource radio ;
une section de planification configurée pour allouer un port de signal de référence de démodulation, DMRS, différent à chacun de la pluralité de terminaux d'utilisateur,
dans lequel la section de transmission (103) est configurée pour transmettre des informations sur le fait qu'une suppression d'interférence successive, SIC, est ou non appliquée au signal de liaison descendante de chacun des terminaux d'utilisateur de manière que le terminal d'utilisateur décode un signal pour le terminal d'utilisateur à partir des signaux de liaison descendante.

**6.** Procédé de communication radio pour un terminal d'utilisateur, comprenant :

la réception de signaux de liaison descendante d'accès multiple non orthogonal, NOMA, superposés sur la même ressource radio transmise avec une puissance de transmission différente à une pluralité de terminaux d'utilisateur, et des informations sur le fait qu'une suppression d'interférence successive, SIC, est ou non appliquée au signal de liaison descendante ;
le décodage d'un signal pour le terminal d'utilisateur à partir des signaux de liaison descendante sur la base des informations sur le fait qu'une SIC est ou non appliquée au signal de liaison descendante ; et
l'identification de chacun des terminaux d'utilisateur sur la base d'un port de signal de référence de démodulation, DMRS.

**7.** Système de communication radio comprenant: un terminal d'utilisateur (20) selon la revendication 1 et une station de base radio (10) selon la revendication 5.

|  | W-CDMA | LTE | FRA |
|---|---|---|---|
| RADIO RESOURCE ALLOCATION | NON-ORTHOGONAL (CDMA) | ORTHOGONAL (OFDMA) | ORTHOGONAL (OFDMA) + SUPERPOSITION/ CANCELLATION (NOMA) |
| LINK ADAPTATION | FAST TPC (TPC: TRANSMISSION POWER CONTROL) | AMC (AMC: ADAPTIVE MODULATION & CODING) | MUPA/AMC (MUPA: MULTI-USER POWER ALLOCATION) |
| MULTIPLE ACCESS IMAGE | NON-ORTHOGONAL ASSISTED BY POWER CONTROL | ORTHOGONAL BETWEEN USERS | SUPERPOSITION & INTERFERENCE CANCELLATION |

FIG.1

EP 3 016 307 B1

EP 3 016 307 B1

FIG.2

```
┌─────────────────────────────────────────────────────────────────┐
│           FEED BACK CHANNEL GAIN OF SUBBAND TO BS                 │──ST01
└─────────────────────────────────────────────────────────────────┘
                              │
              ┌───────────────▼───────────────────────────────────┐
PER           │          SELECT CANDIDATE USER SET OF SUBBAND      │──ST02
SUBBAND       └───────────────────────────────────────────────────┘
              ┌───────────────▼───────────────────────┐ ──ST03
              │  CALCULATE TRANSMISSION POWER OF SUBBAND TO        │
              │            ALLOCATE TO EACH UE         │           PER
              └───────────────▼───────────────────────┘           CANDIDATE
              ┌───────────────▼───────────────────────┐ ──ST04    USER SET
              │     CALCULATE SINR OF SUBBAND IN EACH UE│
              └───────────────▼───────────────────────┘
              ┌───────────────▼───────────────────────┐ ──ST05
              │  CALCULATE THROUGHPUT OF SUBBAND IN EACH UE│
              └───────────────▼───────────────────────┘
              ┌───────────────▼───────────────────────┐ ──ST06
              │     CALCULATE SCHEDULING METRIC OF SUBBAND│
              └───────────────▼───────────────────────┘
         ┌────▼──────────────────────────────────────────────────┐ ──ST07
         │  SELECT USER SET TO MAXIMIZE SCHEDULING METRIC OF SUBBAND│
         └───────────────────▼───────────────────────────────────┘
┌────────────────────────────▼──────────────────────────────────┐ ──ST08
│          CALCULATE AVERAGE SINR OF ALLOCATED SUBBAND            │
└────────────────────────────▼──────────────────────────────────┘
┌────────────────────────────▼──────────────────────────────────┐ ──ST09
│       SELECT MCS THAT IS COMMON TO EACH UE OF ALLOCATED SUBBAND │
└────────────────────────────▼──────────────────────────────────┘
              ┌──────────────▼───────────────────┐ ──ST10
              │           TRANSMIT SIGNAL         │
              └──────────────▼───────────────────┘
       ┌─────────────────────▼───────────────────────────────────┐ ──ST11
       │                  RECEIVE SIGNAL                          │
       └─────────────────────────────────────────────────────────┘
```

┌───────┐
│       │ UE SIDE
└───────┘

┌╌╌╌╌╌╌╌┐
┊       ┊ BS SIDE
└╌╌╌╌╌╌╌┘

FIG.3

EP 3 016 307 B1

SELECT DECODING PATTERN THAT IS COMMON TO EACH USER TERMINAL — ST21

TRANSMIT INFORMATION TO REPRESENT COMMON DECODING PATTERN TO EACH USER TERMINAL — ST22

RECEIVE INFORMATION TO REPRESENT SELECTED DECODING PATTERN — ST23

☐ UE SIDE

⌐ ¬ BS SIDE
⌐ ¬

FIG.4

EP 3 016 307 B1

| | PATTERN 1 | PATTERN 2 | PATTERN 3 | PATTERN 4 |
|---|---|---|---|---|
| FIRST TO DECODE | UE1 | UE2 | UE2 | UE1 |
| SECOND TO DECODE | NONE | NONE | UE1 | UE2 |

FIG.5

| | PATTERN 1 | PATTERN 2 | PATTERN 3 | PATTERN 4 | PATTERN 5 | PATTERN 6 | PATTERN 7 | PATTERN 8 | PATTERN 9 |
|---|---|---|---|---|---|---|---|---|---|
| FIRST TO DECODE | UE1 | UE2 | UE3 | UE2 | UE3 | UE1 | UE3 | UE1 | UE2 |
| SECOND TO DECODE | NONE | NONE | NONE | UE1 | UE1 | UE2 | UE2 | UE3 | UE3 |
| THIRD TO DECODE | NONE | NONE | NONE | NONE | NONE | NONE | NONE | NONE | NONE |

| PATTERN 10 | PATTERN 11 | PATTERN 12 | PATTERN 13 | PATTERN 14 | PATTERN 15 |
|---|---|---|---|---|---|
| UE3 | UE2 | UE3 | UE1 | UE2 | UE1 |
| UE2 | UE3 | UE1 | UE3 | UE1 | UE2 |
| UE1 | UE1 | UE2 | UE2 | UE3 | UE3 |

FIG.6

EP 3 016 307 B1

EP 3 016 307 B1

UE SIDE

BS SIDE

SELECT EACH USER TERMINAL'S DECODING PATTERN INDIVIDUALLY ~ST31

↓

TRANSMIT INFORMATION TO REPRESENT INDIVIDUAL DECODING PATTERNS TO EACH USER TERMINAL ~ST32

↓

RECEIVE INFORMATION TO REPRESENT SELECTED DECODING PATTERN ~ST33

FIG.7

| | PATTERN 1 | PATTERN 2 |
|---|---|---|
| FIRST TO DECODE | UEd | UEn |
| SECOND TO DECODE | NONE | UEd |

FIG.8

| | PATTERN 1 | PATTERN 2 | PATTERN 3 | PATTERN 4 | PATTERN 5 |
|---|---|---|---|---|---|
| FIRST TO DECODE | UEd | UEn1 | UEn2 | UEn2 | UEn1 |
| SECOND TO DECODE | NONE | UEd | UEd | UEn1 | UEn2 |
| THIRD TO DECODE | NONE | NONE | NONE | UEd | UEd |

FIG.9

FIG.10

FIG.11

EP 3 016 307 B1

FIG.12

RADIO BASE STATION

TRANSMISSION SIGNAL (ANTENNA_1)

TRANSMISSION SIGNAL (ANTENNA_2)

307 DOWNLINK CHANNEL MULTIPLEXING SECTION

303 DOWNLINK CONTROL INFORMATION CODING/MODULATION SECTION — PDCCH

306 DOWNLINK REFERENCE SIGNAL GENERATING SECTION — CSI-RS / DEDICATED RS

305 DOWNLINK TRANSMISSION DATA CODING/MODULATION SECTION — PDSCH

302 DOWNLINK CONTROL INFORMATION GENERATING SECTION

304 DOWNLINK TRANSMISSION DATA GENERATING SECTION

301 SCHEDULING SECTION (SELECTION SECTION)

USER TERMINAL

403 FEEDBACK SECTION

401 DOWNLINK CONTROL INFORMATION RECEIVING SECTION

402 CHANNEL ESTIMATION SECTION

405 DOWNLINK TRANSMISSION DATA RECEIVING SECTION

404 INTERFERENCE CANCELLATION SECTION

RECEIVED SIGNAL

FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2139186 A1

- WO 2012161081 A1

**Non-patent literature cited in the description**

- Requirements for Evolved UTRA and Evolved UTRAN. *3GPP TR 25.913*